# EUROPEAN PATENT APPLICATION

(11) **EP 4 521 790 A1**
(43) Date of publication of application: **12.03.2025**
(21) Application number: 23777926.9
(22) Date of filing: 21.03.2023
(51) Int. Cl.: H04W 8/06

(54) **EAS DISCOVERY METHOD, APPARATUS AND NETWORK DEVICE**

(30) Priority: 29.03.2022 CN 202210326264
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Tangqing, Beijing 100032 (CN); WANG, Dan, Beijing 100032 (CN); SUN, Tao, Beijing 100032 (CN)
(74) Representative: Maiwald GmbH
(86) International application number: PCT/CN2023/082835
(87) International publication number: WO 2023/185553

(57) **Abstract**

Provided by the present disclosure are an EAS discovery method, an apparatus, and a network device. The method comprises: a first network function sending a first message to a second network function; or the method comprises: during an EAS search or EAS relocation process, sending network reselection indication information to a terminal on the basis of first information.

## Description

### CROSS REFERENCE TO RELATED APPLICATIONS

This application claims priority to Chinese patent application No. 202210326264.0, filed on March 29, 2022, the entire contents of which are incorporated herein by reference.

### TECHNICAL FIELD

The disclosure relates to a field of wireless technology, in particular to a method for discovering an edge application server (EAS), an apparatus for discovering an EAS, and a network device.

### BACKGROUND

Current wireless communication technologies propose a unified operator-controlled third-party operator platform (OP), and a simple searching process for users to interact directly with the OP. After the introduction of OP, it is necessary to solve a cross-operator problem for an edge application server (EAS). Currently, if the user is located in a network of an operator 1, but there is no OP belonging to the operator 1, and there are only a fifth-generation mobile communication core network 2 (5G Core Network 2 or 5G C2 for short) belonging to the operator 2 and OP coverage are available, when a user equipment (UE) needs to access edge applications, as to how to realize cross-operator (network) discovery of the EAS, and how to relocate the EAS when the user moves, no relevant solutions have been proposed.

### SUMMARY

The purpose of the disclosure is to provide a method for discovering an edge application server (EAS), an apparatus for discovering an EAS and a network device, for implementing cross-network discovery and access of the EAS.

Embodiments of the disclosure provide a method for discovering an EAS, which is performed by a first network function. The method includes:
sending, by the first network device, a first message to a second network function.

Optionally, in the method, sending, by the first network device, the first message to the second network function, includes:
in an EAS searching or relocating process, sending, by the first network device, the first message to the second network function based on first information.

Optionally, in the method, after sending, by the first network device, the first message to the second network function, the method includes:
receiving a second message sent by the second network function;
in which the second message includes EAS information.

Optionally, in the method, the method includes:
in an EAS searching process, receiving a third message sent by a third network function.

Optionally, in the method, the method includes:
receiving, by the third network function, a fourth message that matches a first rule, and sending, by the third network function, the third message to the first network function.

Optionally, in the method, the first rule is a domain name system (DNS) message processing rule.

Optionally, in the method, sending, by the first network function, the first message to the second network function, includes:
sending, by the first network function, the first message to the second network function according to the third message.

Optionally, in the method, the first rule includes at least one of:
according to a location of a terminal, providing no edge application service in a first network;
an application requested by the fourth message being a joint application; or
a second network providing an edge application service.

Optionally, in the method, in an EAS relocating process, sending, by the first network function, the first message to the second network function, includes:
in the EAS relocating process, in response to a second rule being met, sending, by the first network function, the first message to the second network function.

Optionally, in the method, the second rule includes at least one of:
according to a location of a terminal, providing no edge application service in a first network; or
a second network providing an edge application service.

Optionally, in the method, the method includes:
in an EAS searching process, screening networks based on the first information, and selecting an EAS that can provide services for a terminal.

Optionally, in the method, the first message includes at least one of following information:
a location of a terminal;
an application identifier;
a public land mobile network (PLMN) identifier; or
an external group identifier.

Optionally, in the method, the first information includes at least one of:
federation information;
a federation capability identifier of a terminal;
a serving network; or
an operator latency list.

Optionally, in the method, the method includes:
obtaining the serving network and/or the federation capability identifier during a protocol data unit (PDU) session establishment process of the terminal.

Optionally, in the method, the method includes:
receiving, by the first network function, the federation information sent by the second network function through a fifth message.

Optionally, the federation information includes at least one of:
an application identifier;
a data network access identifier (DNAI);
a PLMN identifier;
latency information; or
a supported access mode.

Optionally, in the method, the federation information is provided by an application function (AF) to the second network function.

Optionally, in the method, in an EAS searching or relocating process, after receiving the second message sent by the second network function, the method further includes:
in a PDU session change process, inserting a local PDU session anchor (L-PSA) as needed.

Optionally, in the method, in an EAS searching or relocating process, after receiving the second message sent by the second network function, the method further includes:
carrying EAS information in a PDU session modification command.

Optionally, in the method, the second message includes at least one of the following information:
an EAS IP address; or
an EAS fully qualified domain name (FQDN).

Embodiments of the disclosure provide a method for an EAS, which is performed by a second network function. The method includes:
receiving a first message sent by a first network function;
and/or, obtaining address information of a fourth network function;
and/or, sending a sixth message to a fourth network function for requesting to obtain EAS information.

Optionally, in the method, the method includes:
receiving a seventh message sent by the fourth network function, the seventh message including EAS information.

Optionally, in the method, the method includes:
sending a second message to the first network function, the second message including EAS information.

Optionally, in the method, obtaining the address information of the fourth network function, includes:
obtaining the address information of the fourth network function according to second information.

Optionally, in the method, the second information is network pre-configured information for searching for address information of a cross-network network exposure function (NEF).

Optionally, in the method, the method includes:
sending an eighth message to a fifth network function;
and/or, receiving a ninth message sent by a fifth network function.

Optionally, in the method, the ninth message includes the address information of the fourth network function.

Optionally, in the method, the first message includes at least one of the following information:
a location of a terminal;
an application identifier;
a PLMN identifier; or
an external group identifier.

Optionally, in the method, the seventh message includes at least one of the following information:
an EAS IP address; or
an EAS FQDN.

Optionally, in the method, the eighth message includes at least one of the following information:
a location of a terminal;
an application identifier;
a PLMN identifier; or
an external group identifier.

Embodiments of the disclosure provide a method for discovering an EAS, which is performed by a fourth network function. The method includes:
receiving a sixth message sent by a second network function for requesting to obtain EAS information;
and/or, sending a tenth message to a sixth network function for requesting to obtain EAS information.

Optionally, in the method, the method includes:
receiving an eleventh message sent by the sixth network function, the eleventh message including the EAS information.

Optionally, in the method, the method includes:
sending a seventh message to the second network function NEF1, the seventh message including the EAS information.

Optionally, in the method, the sixth message and the tenth message each includes at least one of the following information:
a location of a terminal;
an application identifier;
a PLMN identifier; or
an external group identifier.

Optionally, in the method, the eleventh message includes at least one of the following information:
an EAS IP address; or
an EAS FQDN.

Embodiments of the disclosure provide a method for an EAS, which is performed by a sixth network function. The method includes:
receiving a tenth message sent by a fourth network function for requesting to obtain EAS information;
and/or, obtaining EAS information according to a tenth message.

Optionally, in the method, the method includes:
sending an eleventh message to the fourth network function, the eleventh message including the EAS information.

Optionally, in the method, obtaining the EAS information according to the tenth message, includes:
obtaining the EAS information according to the tenth message after a seventh network function performs DNS query for a DNS server.

Optionally, in the method, the method includes:
determining, by the sixth network function, the DNS server according to third information.

Optionally, in the method, the third information includes at least one of:
a location of a terminal;
application representation;
external group identifier; or
EAS deployment information (EDI).

Optionally, in the method, the tenth information includes at least one of:
a location of a terminal;
an application identifier;
a PLMN identifier; or
an external group identifier.

Embodiments of the disclosure provide a method for discovering an EAS, which is performed by a fifth network function. The method includes:
receiving an eighth message sent by a second network function;
and/or, sending a ninth message to a second network function.

Optionally, in the method, the ninth message includes address information of a fourth network function.

Optionally, in the method, the eighth message includes at least one of:
a location of terminal;
an application identifier;
a PLMN identifier; or
an external group identifier.

Optionally, in the method performed by a first network function, the method includes:
in an EAS searching or relocating process, sending reselected network indication information to a terminal based on first information.

Optionally, in the method, in the EAS searching process, the method further includes:
receiving a first message sent by a second network function.

Optionally, in the method, in the EAS searching process, the method further includes:
receiving, by the second network function, a second message and matching the second message with a first rule, and sending the first message to the first network function.

Optionally, in the method, in the EAS searching process, sending, by the first network function, the reselected network indication information to the terminal based on the first information, includes:
sending, by the first network function, the reselected network indication information to the terminal based on the first information after receiving the first message.

Optionally, in the method, the first rule includes at least one of:
according to a location of the terminal, providing no edge application service in a first network; or
an application requested of the second message being a joint application, and a second network providing an edge application service.

Optionally, in the method, in the EAS relocating process, sending the reselected network indication information to the terminal based on the first information, includes:
in the EAS relocating process, in response to conditions of a second rule being met, sending the reselected network indication information to the terminal based on the first information.

Optionally, in the method, the second rule includes at least one of:
an AF triggering EAS redirection; or
the terminal being moving.

Optionally, in the method, the method includes:
selecting an EAS by screening a network list based on the first information.

Optionally, in the method, the first information includes at least one of:
federation information;
a federation capability identifier of a terminal;
a serving network; or
an operator latency list.

Optionally, in the method, the method includes:
obtaining the serving network and/or the federation capability identifier during a PDU session establishment process of the terminal.

Optionally, in the method, the method includes:
receiving, by the first network function, the federation information sent by a third network function through a third message.

Optionally, in the method, the federation information includes at least one of:
an application identifier;
a DNAI;
a PLMN identifier;
latency information; or
a supported access mode.

Optionally, in the method, the federation information is provided by an AF to the second network function.

Embodiments of the disclosure provide a method for discovering an EAS, which is performed by a terminal. The method includes:
in an EAS searching or relocating process, receiving reselected network indication information sent by a first network function.

Optionally, in the method, the method includes:
establishing a PDU session with a network indicated by the reselected network indication information, and performing EAS accessing.

Embodiments of the disclosure provide a network device, the network device being a first network function, including a transceiver, configured to:
send a first message to a second network function.

Embodiments of the disclosure provide a network device, the network device being a second network function, including a transceiver, configured to:
receive a first message sent by a first network function;
and/or, obtain address information of a fourth network function;
and/or, send a sixth message to a fourth network function for requesting to obtain EAS information.

Embodiments of the disclosure provide a network device, the network device being a fourth network function, including a transceiver, configured to:
receive a sixth message sent by a second network function for requesting to obtain EAS information;
and/or, send a tenth message to a sixth network function for requesting to obtain EAS information.

Embodiments of the disclosure provide a network device, the network device being a sixth network function, including a transceiver, configured to:
receive a tenth message sent by a fourth network function for requesting to obtain EAS information;
and/or, obtain EAS information according to a tenth message.

Embodiments of the disclosure provide a network device, the network device being a fifth network function, including a transceiver, configured to:
receive an eighth message sent by a second network function;
and/or, send a ninth message to a second network function.

Embodiments of the disclosure provide a network device, the network device being a first network function, including a transceiver, configured to:
in an EAS searching or relocating process, send reselected network indication information to a terminal based on first information.

Embodiments of the disclosure provide a terminal, including a transceiver, configured to:
in an EAS searching or relocating process, receive reselected network indication information sent by a first network function.

Embodiments of the disclosure provide an apparatus for discovering an EAS, applicable for a first network function, including:
a first transceiver unit, configured to send a first message to a second network function.

Embodiments of the disclosure provide an apparatus for discovering an EAS, applicable for a second network function, including:
a second transceiver unit, configured to: receive a first message sent by a first network function;
and/or, obtain address information of a fourth network function;
and/or, send a sixth message to a fourth network function for requesting to obtain EAS information.

Embodiments of the disclosure provide an apparatus for discovering an EAS, applicable for a fourth network function, including:
a third transceiver unit, configured to: receive a sixth message sent by a second network function for requesting to obtain EAS information;
and/or, send a tenth message to a sixth network function for requesting to obtain EAS information.

Embodiments of the disclosure provide an apparatus for discovering an EAS, applicable for a sixth network function, including:
a fourth transceiver unit, configured to: receive a tenth message sent by a fourth network function for requesting to obtain EAS information;
and/or, obtain EAS information according to a tenth message.

Embodiments of the disclosure provide an apparatus for discovering an EAS, applicable for a fifth network function, including:
a fifth transceiver unit, configured to: receive an eighth message sent by a second network function;
and/or, send a ninth message to a second network function.

Embodiments of the disclosure provide an apparatus for discovering an EAS, applicable for a first network function, including:
a first transceiver unit, configured to: in an EAS searching or relocating process, send reselected network indication information to a terminal based on first information.

Embodiments of the disclosure provide an apparatus for discovering an EAS, applicable for a terminal, including:
a second transceiver unit, configured to: in an EAS searching or relocating process, receive reselected network indication information sent by a first network function.

Embodiments of the disclosure provide a network device, including: a transceiver, a processor, a memory, and programs or instructions stored on the memory and executable by the processor. When the programs or instructions are executed by the processor, the method for discovering as described in any one of the above embodiments is implemented.

Embodiments of the disclosure provide a readable storage medium having programs or instructions stored thereon. When the programs or instructions are executed by a processor, the steps of the method for discovering as described in any one of the above embodiments are implemented.

The beneficial effects of the above technical solutions disclosed in the disclosure are provided as follows.

In the method for discovering described in the embodiments of the disclosure, during the EAS searching or relocating process, the first network function can send the first message to the second network function through the first information for requesting a cross-network EAS, thereby realizing cross-network discovery and access of the EAS.

### BRIEF DESCRIPTION OF THE DRAWINGS

FIG. 1 is a schematic diagram of a system using the method described in embodiments of the disclosure.
FIG. 2 is a flowchart of a first implementation mode 1 of the method described in a first embodiment of the disclosure.
FIG. 3 is a schematic diagram of a first implementation mode of the method according to an embodiment of the disclosure.
FIG. 4 is a schematic diagram of a second implementation mode of the method according to an embodiment of the disclosure.
FIG. 5 is a schematic diagram of federation information transmission.
FIG. 6 is a flowchart of a second implementation mode of the method described in the first embodiment of the disclosure.
FIG. 7 is a flowchart of a third implementation mode of the method described in the first embodiment of the disclosure.
FIG. 8 is a flowchart of a fourth implementation mode of the method described in the first embodiment of the disclosure.
FIG. 9 is a flowchart of a fifth implementation mode of the method described in the first embodiment of the disclosure.
FIG. 10 is a flowchart of a first implementation mode of the method described in a second embodiment of the disclosure.
FIG. 11 is a flowchart of a second implementation mode of the method described in the second embodiment of the disclosure.
FIG. 12 is a schematic diagram of a third implementation mode of the method according to an embodiment of the disclosure.
FIG. 13 is a schematic diagram of a fourth implementation mode of the method according to an embodiment of the disclosure.

### DETAILED DESCRIPTION

In order to make the technical problems to be solved, the technical solutions and the advantages of the disclosure clearer, a detailed description will be given below with reference to the accompanying drawings and specific embodiments.

It should be appreciated that reference throughout this specification to "one embodiment" or "an embodiment" means that particular features, structures, or characteristics related to the embodiment are included in at least one embodiment of the disclosure. Therefore, the term "in one embodiment" or "in an embodiment" appears in various places throughout this specification are not necessarily referring to the same embodiment. Furthermore, these features, structures or characteristics may be combined in any suitable manner in one or more embodiments.

In various embodiments of the disclosure, it should be understood that the sequence numbers of the following processes do not imply the order of execution, and the execution order of the processes should be determined by its function and internal logic and should not constitute any limitation on the implementation of the embodiments of the disclosure.

To achieve cross-network discovery and access of an edge application server (EAS), the embodiments of the disclosure provide a method for discovering an EAS. In an EAS searching or relocating process, a first network function sends a first message to a second network function to request a cross-network EAS, thereby achieving cross-network discovery and access of the EAS.

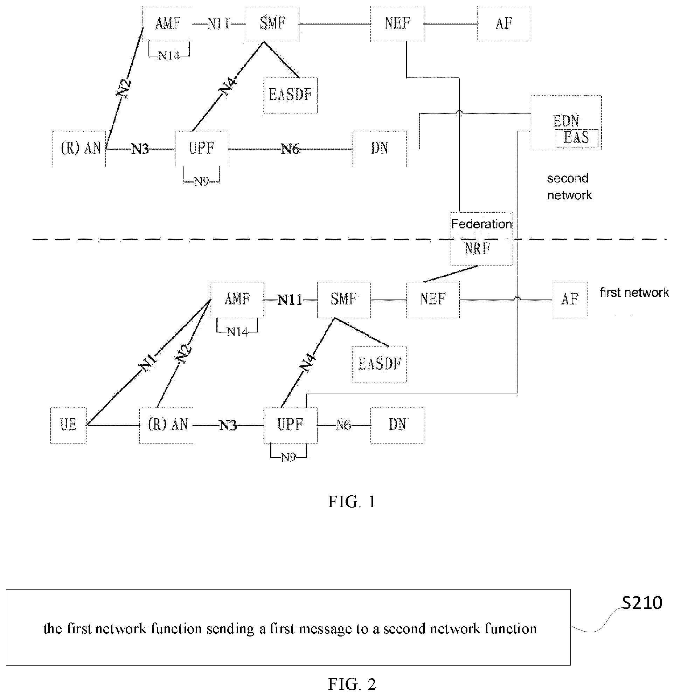

FIG. 1 is an application system that adopts the method for discovering an EAS described in the embodiments of the disclosure. The application system includes at least two networks, which may also be referred to as including at least two operator networks. A core network of each network operator includes multiple network functions, such as application function (AF), access and mobility management function (AMF), session management function (SMF), network exposure function (NEF), user plane function (UPF), edge application server discovery function (EASDF), data network (DN) and EAS, etc. A user equipment (UE) is connected to the network functions of the core network via a radio access network (RAN).

Using the method for discovering described in the embodiments of the disclosure, in an implementation, a UE of a first network can search for or discover an EAS of a second network through a network function of the first network, or relocate an EAS in a second network through a network function of the first network, thereby achieving cross-network discovery and access of the EAS.

### First Embodiment

According to the method for discovering an EAS described in the first embodiment of the disclosure, in an implementation, the method is performed by a first network function. As shown in FIG. 2, the method includes the following steps.

At step S210, the first network function SMF1 sends a first message to a second network function NEF1.

In an implementation, optionally, sending, by the first network function SMF1, the first message to the second network function NEF1, includes:
in an EAS searching or relocating process, sending, by the first network function SMF1, the first message to the second network function NEF1 based on first information.

By adopting the method for discovering described in the first embodiment, the first network function can send the first message to the second network function through the first information to request a cross-network EAS, thereby realizing cross-network discovery and access of the EAS.

In the first embodiment of the disclosure, the first network function and the second network function are network functions of the first network. Optionally, the first network function is an SMF, and the second network function is an NEF. In order to distinguish from network functions of the second network, the first network function may be represented by SMF1, and the second network function may be represented by NEF1.

In an embodiment of the disclosure, optionally, the first information includes at least one of:
federation information;
a federation capability identifier of a terminal;
a serving network, optionally, the serving network may be a serving Public Land Mobile Network (serving PLMN) or a serving network; or
an operator latency list.

Optionally, the operator latency list is provided by an application, which provides an end-to-end delay from a server to a terminal in each network for the SMF to select and use.

In an implementation, optionally, in an EAS searching process, the first network function SMF1 screens networks based on the first information and selects an EAS that can provide services to the terminal. Optionally, the first network function SMF1 selects the optimal EAS that can provide services to the terminal.

In the first embodiment of the disclosure, optionally, the first message includes at least one of the following information:
a location of a terminal;
an application identifier;
a PLMN identifier; or
an external group identifier.

In an implementation, optionally, the PLMN identifier in the first message is a network identifier of a requested second network. The first network function SMF1 sends the first message to the second network function NEF1, and the second network function NEF1 can send a request message to a network function of the second network, such as an NEF of the second network, to search for or discover an EAS of the second network or relocate an EAS in the second network.

In the method for discovering described in the first embodiment of the disclosure, after step S210, the method further includes:
receiving a second message sent by the second network function NEF1, in which the second message includes EAS information.

Optionally, the second message is a response message to the first message.

In an embodiment of the disclosure, optionally, the first message is a federation event exposure request (Nnef_FederationEventExposure request) message, and the second message is a federation event exposure response (Nnef_FederationEventExposure response) message.

In an embodiment of the disclosure, optionally, in an EAS searching process, the method further includes:
receiving a third message sent by a third network function.

The third network function receives a fourth message, matches the fourth message with a first rule, and sends the third message to the first network function SMF1.

After receiving the third message, the first network function SMF1 sends the first message to the second network function NEF1 based on the first information.

Optionally, the first rule is a domain name system (DNS) message processing rule.

Optionally, the first rule includes at least one of:
according to a location of a terminal, providing no edge application service in a first network;
an application requested by the fourth message being a joint application; or
a second network providing an edge application service.

In the first embodiment of the disclosure, optionally, the third network function may be an EASDF. To conveniently distinguish the third network function from the network functions of the second network, the third network function may be represented by EASDF1.

Optionally, the fourth message is a DNS query request message, and the third message is a DNS message.

In the method for discovering described in the embodiment of the disclosure, in an implementation, during an EAS searching process, the terminal sends a fourth message (i.e., a DNS query request) to the third network function EASDF1, the third network function EASDF1 matches the fourth message with the rule and sends a third message (i.e., a DNS request) to the first network function SMF1. The first network function SMF1 sends a first message to the second network function NEF1 based on the third message (i.e., the DNS request) and the first information. That is, a federation event exposure request (Nnef_FederationEventExposure request) is sent.

In another implementation, optionally, in an EAS relocating process, sending the first message to the second network function NEF1, includes:
in an EAS relocating process, in response to a second rule being met, sending, by the first network function SMF1, the first message to the second network function NEF1.

The second rule includes at least one of:
according to a location of a terminal, providing no edge application service in a first network; or
a second network providing an edge application service.

Optionally, the method further includes: in response to determining that the UE is moving, triggering, by the first network function SMF1, insertion of a local protocol data unit (PDU) session anchor (L-PSA) and EAS redirection; and/or, triggering EAS redirection through an AF. For example, when the AF detects that a serving state of the terminal does not meet a requirement, the AF triggers the EAS redirection.

With this implementation, after starting the EAS redirection based on the above conditions, in a case where the first network function SMF1 determines, according to the location of the terminal, that there is no EAS in the first network that can provide an edge application service; and/or, determines, according to pre-obtained information, that there is an EAS in the second network that can provide an edge application service to the terminal, the first network function SMF1 sends the first message, i.e., a federation event exposure request (Nnef_FederationEventExposure request), to the second network function NEF1 based on the first information, to request a cross-network EAS, thereby realizing cross-network discovery and access of the EAS.

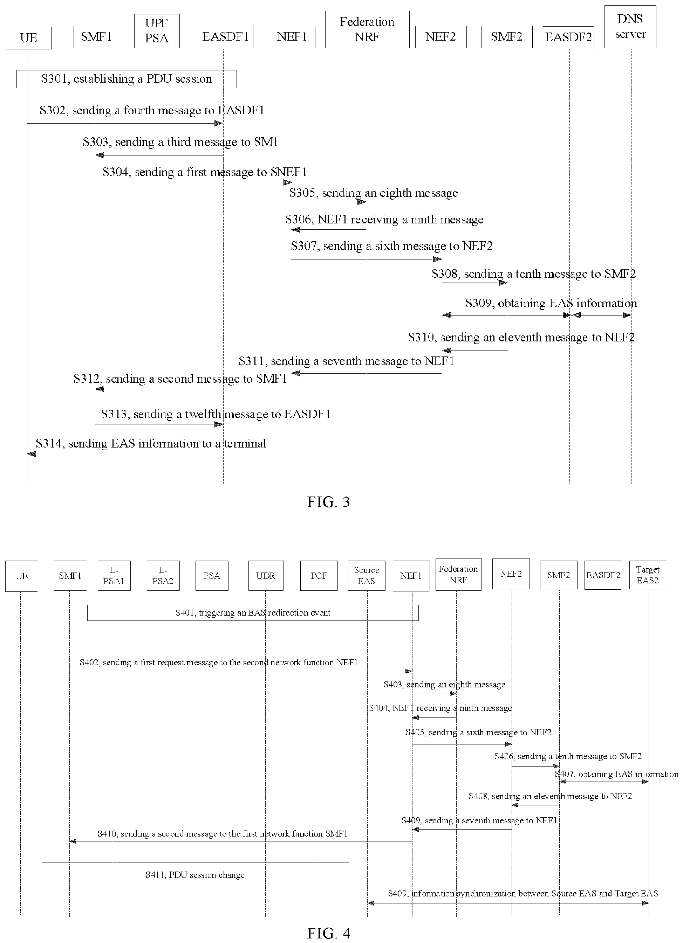

The following is a detailed description of specific implementations of the method for discovering described in the embodiments of the disclosure during an EAS searching process and an EAS relocating process in combination with FIGS. 3 and 4.

As shown in FIG. 3, in an EAS searching process, the method for discovering described in the embodiment of the disclosure is used to realize cross-network discovery and access of the EAS. The method includes the following steps.

At step S301, a terminal (UE) completes PDU session establishment in a first network. Optionally, during the PDU session establishment process, session management (SM) context information of the PDU session establishment process carries the serving network and/or the federation capability identifier of the terminal. Optionally, the serving network includes but is not limited to a PLMN ID. PDU stands for protocol data unit.

Optionally, after establishing the PDU session, EASDF selection is performed.

At step S302, the UE sends a fourth message (i.e., a DNS query request) to a third network function EASDF 1.

At step S303, the third network function EASDF1 matches the fourth message with a first rule according to the fourth message, and sends a third message to the first network function SMF1, in which the third message is a DNS message.

Optionally, the first rule includes at least one of:
according to a location of a terminal, providing no edge application service in a first network;
an application requested by the fourth message being a joint application; or
a second network providing an edge application service.

At step S304, the first network function SMF1 sends a first message to the second network function NEF1 based on first information. That is, the first network function SMF1 sends a federation event exposure request (Nnef_FederationEventExposure request).

In detail, the first network function SMF1 generates a network list containing screened out networks of other operators that can provide services to the terminal based on at least one of federation information, a federation capability identifier of the terminal and a serving network in the first information. According to the operator latency list of each operator fed back by the AF, the operator network (second network) with the shortest latency is selected from the network list of other operators to provide services to the terminal. When it is determined that an EAS2 of the optimal second network is accessible through the first network, the federation event exposure request (Nnef_FederationEventExposure request) is invoked and sent to the second network function NEF1.

In the embodiment of the disclosure, optionally, the federation event exposure request (first message) includes at least one of the following information:
a location of a terminal;
an application identifier;
a PLMN identifier; or
an external group identifier.

Using the method for discovering described in the embodiment of the disclosure, the second network function NEF1 obtains address information of a fourth network function according to the first message.

In the embodiment of the disclosure, the fourth network function is a network function of the second network. Optionally, the fourth network function is an NEF, and to distinguish it from the network functions of the first network, the fourth network function can be represented by NEF2.

In an implementation, optionally, the second network function NEF1 may obtain the address information of the fourth network function NEF2 through the following steps S305 and S306.

At step S305, the second network function NEF1 sends an eighth message to a fifth network function, in which the eighth message is used to request to query the address information of the fourth network function NEF2.

Optionally, in combination with FIG. 1, the fifth network function may be a Federation NRF connected between the NEF1 of the first network and the NEF2 of the second network, and is used for querying address information of NEFs of multiple networks.

In an implementation of the embodiment of the disclosure, optionally, the eighth message includes at least one of the following information:
a location of a terminal;
an application identifier;
a PLMN identifier; or
an external group identifier.

At step S306, the second network function NEF1 receives a ninth message sent by the fifth network function, in which the ninth message is a response message to the eighth message.

The ninth message includes the address information of the fourth network function NEF2.

In this step, the fifth network function Federation NRF searches for address information of an NEF of a corresponding network according to the requested PLMN identifier in the eighth message. That is, the fifth network function Federation NRF determines the address information of the fourth network function NEF2, and sends a third response message to the second network function NEF1, which is used to carry the address information of the fourth network function NEF2.

In an embodiment of the disclosure, in another implementation, optionally, the second network function NEF1 may also obtain the address information of the fourth network function NEF2 according to the second information instead of through the fifth network function Federation NRF.

The second information is network pre-configured information, which is used to search for address information of a cross-network NEF.

In detail, address information of NEFs of networks other than the first network can be preconfigured on the NEF of the first network, i.e., preconfigured on the second network function NEF1. In this implementation, according to the pre-configured information, the second network function NEF1 can directly obtain the address information of the fourth network function NEF2.

At step S307, the second network function NEF1 sends a sixth message to the fourth network function NEF2 to request to obtain accessible EAS information.

Optionally, the second network function NEF1 sends the sixth message by invoking an event exposure request (Nnef_EventExposure request). Optionally, the sixth message includes at least one of the following information:
a location of a terminal;
an application identifier;
a PLMN identifier; or
an external group identifier.

At step S308, the fourth network function NEF2 receives the sixth message, determines that the sixth message is a joint application access request sent by the first network according to an external group identifier in the sixth message, and then sends a tenth message to a sixth network function for requesting to obtain EAS information.

Optionally, the sixth network function is an SMF of the second network, and to distinguish it from the network functions of the first network, optionally, the sixth network function may be represented by SMF2.

In the embodiment of the disclosure, optionally, the fourth network function NEF2 sends the tenth message by invoking an event exposure request (Nsmf_EventExposure request). The tenth message includes at least one of the following information:
a location of a terminal;
an application identifier;
a PLMN identifier; or
an external group identifier.

At step S309, the sixth network function SMF2 obtains the accessible EAS information according to the tenth message.

Optionally, the sixth network function SMF2 obtains the accessible EAS information after performing DNS query on a DNS server through a seventh network function.

Optionally, the sixth network function SMF2 determines the DNS server according to third information.

The third information includes at least one of:
a location of a terminal;
application representation;
an external group identifier; or
EAS deployment information (EDI).

In the embodiment of the disclosure, the seventh network function is an EASDF of the second network, and to distinguish it from the network functions of the first network, the seventh network function is represented by EASDF2.

In this implementation step, the sixth network function SMF2 performs EDI query according to at least one of the location of the terminal, the application identifier, the PLMN identifier or the external group identifier in the tenth message. After determining the DNS server, the sixth network function SMF2 performs DNS query on the determined DNS server through the seventh network function EASDF2 to obtain the accessible EAS information.

At step S310, the sixth network function SMF2 sends an eleventh message to the fourth network function NEF2, in which the eleventh message includes EAS information.

The eleventh message is a response message to the tenth message. Optionally, the EAS information includes an internet protocol (IP) address and/or a FQDN.

Optionally, the eleventh message is an event exposure response (Nsmf_EventExposure response) message.

At step S311, the fourth network function NEF2 sends a seventh message to the second network function NEF1, in which the seventh message includes the EAS information.

Optionally, the seventh message is a response message to the sixth message.

Optionally, the seventh message is an event exposure response (Nnef_EventExposure response) message, and the fourth network function NEF2 sends the accessible EAS information to the second network function NEF1 by invoking the event exposure response (Nnef_EventExposure response) message.

At step S312, after receiving the seventh message, the second network function NEF1 sends a second message to the first network function SMF1, in which the second message is a response message to the first message, including the EAS information.

Optionally, when the first message is the Nnef_FederationEventExposure request, the second message is the Nnef_FederationEventExposure response.

At step S313, the first network function SMF1 sends a twelfth message to the third network function EASDF1, in which the twelfth message includes an EAS message.

Optionally, the twelfth message is a response message to the third message.

In addition, the first network function SMF1 also triggers a ULCL/BP insertion process as needed.

Optionally, the twelfth message is a DNS context notification response (Neasdf_DNSContext_Notify Response) message.

At step S314, the third network function EASDF1 sends the accessible EAS information to the terminal, so that the terminal can access the EAS of the second network according to the EAS information.

In the above implementations of the method for discovering the EAS described in the first embodiment of the disclosure, in an EAS searching process, the first network function sends the first request message to the second network function by using the first information to request for a cross-network EAS, thereby realizing cross-network discovery and access of the EAS.

As shown in FIG. 4, in an EAS relocating process, the method for discovering described in the embodiment of the disclosure is used to realize discovery and access of a cross-network EAS. The method includes the following steps.

At step S401, an EAS redirection event is triggered. For example, in response to determining that the UE is moving, a first network function SMF1 triggers insertion of L-PSA and EAS redirection. And/or, EAS redirection is triggered through an AF, e.g., when the AF detects that a serving state of the terminal does not meet requirements, the AF triggers the EAS redirection.

At step S402, the first network function SMF1 sends a first message to a second network function NEF1 according to first information.

Optionally, in the EAS relocating process, when a second rule is met, the first network function SMF1 sends the first message to the second network function NEF1.

The second rule includes at least one of:
according to a location of a terminal, providing no edge application service in a first network; or
a second network providing an edge application service.

It should be noted that the first network does not provide the edge application service. The edge application service of the application is not provided at this location, because no EAS is deployed here or the IP is unreachable.

In detail, the first message is a federation event exposure request (Nnef_FederationEventExposure request), the first network function SMF1 invokes the federation event exposure request (Nnef_FederationEventExposure request) to request to update the EAS.

Optionally, the federation event service request message (first message) includes at least one of the following information:
a location of a terminal;
an application identifier;
a PLMN identifier; or
an external group identifier.

Using the method for discovering described in the embodiment of the disclosure, the second network function NEF1 obtains address information of a fourth network function according to the first message.

In the embodiment of the disclosure, the fourth network function is a network function of the second network. Optionally, the fourth network function is an NEF, and to distinguish it from the network functions of the first network, the fourth network function can be represented by NEF2.

In an implementation, optionally, the second network function NEF1 may obtain the address information of the fourth network function NEF2 through the following steps S403 and S404.

At step S403, the second network function NEF1 sends an eighth message to a fifth network function, in which the eighth message is used to request to query the address information of the fourth network function NEF2.

Optionally, as shown in FIG. 1, the fifth network function may be a Federation NRF connected between the NEF1 of the first network and the NEF2 of the second network, and is used for querying the address information of NEFs of multiple networks.

In an implementation of the embodiment of the disclosure, optionally, the eighth message includes at least one of the following information:
a location of a terminal;
an application identifier;
a PLMN identifier; or
an external group identifier.

At step S404, the second network function NEF1 receives a ninth message sent by the fifth network function, in which the ninth message is a response message to the eighth message.

The ninth message includes the address information of the fourth network function NEF2.

In this step, the fifth network function Federation NRF searches for the address information of the NEF of the corresponding network according to the PLMN identifier requested in the eighth message. That is, the fifth network function Federation NRF determines the address information of the fourth network function NEF2, and sends a third response message to the second network function NEF1, which is used to carry the address information of the fourth network function NEF2.

In an embodiment of the disclosure, in another implementation, optionally, the second network function NEF1 may also obtain the address information of the fourth network function NEF2 according to the second information instead of through the fifth network function Federation NRF.

The second information is network pre-configured information, which is used to search for address information of a cross-network NEF.

In detail, the address information of NEFs of networks other than the first network can be preconfigured on the NEF of the first network, i.e., preconfigured on the second network function NEF1. In this implementation, according to the pre-configured information, the second network function NEF1 can directly obtain the address information of the fourth network function NEF2.

At step S405, the second network function NEF1 sends a sixth message to the fourth network function NEF2 to request to obtain accessible EAS information.

Optionally, the second network function NEF1 sends the sixth message by invoking an event exposure request (Nnef_EventExposure request). Optionally, the sixth message includes at least one of the following information:
a location of a terminal;
an application identifier;
a PLMN identifier; or
an external group identifier.

At step S406, the fourth network function NEF2 receives the sixth message, determines that the sixth message is a joint application access request sent by the first network according to an external group identifier in the sixth message, and then sends a tenth message to a sixth network function to request to obtain EAS information.

Optionally, the sixth network function is an SMF of the second network, and to distinguish it from the network functions of the first network, optionally, the sixth network function may be represented by SMF2.

In an embodiment of the disclosure, optionally, the fourth network function NEF2 sends the tenth message by invoking an event exposure request (Nsmf_EventExposure request). The tenth message includes at least one of the following information:
a location of a terminal;
an application identifier;
a PLMN identifier; or
an external group identifier.

At step S407, the sixth network function SMF2 obtains the accessible EAS information according to the tenth message.

Optionally, the sixth network function SMF2 obtains the accessible EAS information after the seventh network function performs DNS query for a DNS server.

Optionally, the sixth network function SMF2 determines the DNS server according to third information.

The third information includes at least one of:
a location of a terminal;
application representation;
external group identifier; or
EAS deployment information (EDI).

In the embodiment of the disclosure, the seventh network function is an EASDF of the second network. To distinguish it from the network functions of the first network, the seventh network function may be represented by EASDF2.

In this implementation step, the sixth network function SMF2 performs EDI query according to at least one of the location of the terminal, the application identifier, the PLMN identifier or the external group identifier in the tenth message. After determining the DNS server, the seventh network function EASDF2 performs DNS query for the determined DNS server to obtain the accessible EAS information.

At step S408, the sixth network function SMF2 sends an eleventh message to the fourth network function NEF2, in which the eleventh message includes the EAS information.

The eleventh message is a response message to the tenth message. Optionally, the EAS information includes an IP address and/or a FQDN.

Optionally, the eleventh message is an event exposure response (Nsmf_EventExposure response) message.

At step S409, the fourth network function NEF2 sends a seventh message to the second network function NEF1, in which the seventh message includes the EAS information.

Optionally, the seventh message is a response message to the sixth message.

Optionally, the seventh message is an event exposure response (Nnef_EventExposure response) message. The fourth network function NEF2 sends the accessible EAS information to the second network function NEF1 by invoking the event exposure response (Nnef_EventExposure response) message.

At step S410, after receiving the seventh message, the second network function NEF1 sends a second message to the first network function SMF1, in which the second message is a response message to the first message and includes the EAS information.

Optionally, if the first message is the Nnef_FederationEventExposure request, the second message is the Nnef_FederationEventExposure response.

At step S411, the first network function SMF1 performs a PDU session modification step according to the EAS information in the second message, creates a new L-PSA2 according to the location of the terminal, and carries the EAS information returned by the second message in a PDU session modification command.

At step S412, the AF completes information synchronization between a source EAS and a target EAS, and performs context transfer.

In detail, the source EAS is an EAS that has been accessed before the EAS redirection event is triggered, and the target EAS is an EAS corresponding to the EAS information returned by the first response message.

The method for discovering according to the embodiment of the disclosure further includes:
obtaining the serving network and/or the federation capability identifier during a PDU session establishment process of the terminal.

Optionally, the described method for discovering includes:
Receiving, by the first network function SMF1, the federation information sent by the second network function NEF1 through the fifth message.

Optionally, in the described for discovering method, the federation information includes at least one of:
an application identifier;
a DNAI;
a PLMN identifier;
latency information; or
a supported access mode.

Optionally, in the described method for discovering, the federation information is provided by the AF to the second network function NEF.

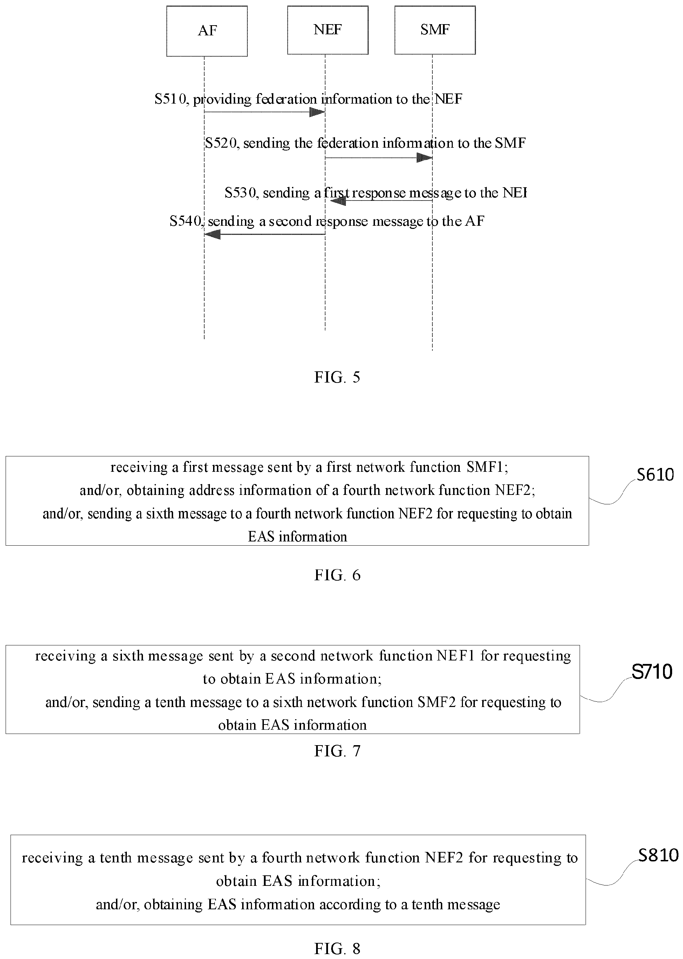

In combination with FIG. 5, the method described in the embodiment of the disclosure is adopted. The process of obtaining federation information by an SMF includes the following steps.

At step S510, an AF provides the federation information to an NEF. The federation information refers to relevant information provided by an operator in a federation platform, which may be an address and deployment information of the NEF, a list of edge applications supported within each operator and their location information. Optionally, the federation information includes at least one of:
an application identifier;
a DNAI;
a PLMN identifier;
latency information; or
a supported access mode.

At step S520, the NEF sends the federation information to the SMF. Optionally, the federation information is sent to the SMF by invoking a federation providing message, a federation parameter providing message, a federation information providing message, etc.

At step S530, the SMF stores the federation information and returns a first response message to the NEF.

At step S540, the NEF sends a second response message to the AF.

An embodiment of the disclosure also provides a method for an EAS, which is performed by a second network function NEF1. As shown in FIG. 6, the method includes the following steps.

At step S610, a first message sent by a first network function SMF1 is received;
and/or, address information of a fourth network function NEF2 is obtained;
and/or, a sixth message is sent to the fourth network function NEF2 to request to obtain EAS information.

Optionally, in the method, the method includes:
receiving a seventh message sent by the fourth network function NEF2, the seventh message including the EAS information.

Optionally, in the method, the method includes:
sending a second message to the first network function SMF 1, the second message including the EAS information.

Optionally, in the method, obtaining the address information of the fourth network function NEF2, includes:
obtaining address information of the fourth network function NEF2 according to second information.

Optionally, in the method, the second information is network pre-configured information for searching for address information of a cross-network NEF.

Optionally, in the method, the method includes:
sending an eighth message to a fifth network function Federation NRF;
and/or, receiving a ninth message sent by the fifth network function Federation NRF.

Optionally, in the method, the ninth message includes the address information of the fourth network function NEF2.

Optionally, in the method, the first message includes at least one of the following information:
a location of a terminal;
an application identifier;
a PLMN identifier; or
an external group identifier.

Optionally, in the method, the seventh message includes at least one of the following information:
an EAS IP address; or
an EAS FQDN.

Optionally, in the method, the eighth message includes at least one of the following information:
a location of a terminal;
an application identifier;
a PLMN identifier; or
an external group identifier.

The embodiment of the disclosure also provides a method for an EAS, which is performed by a fourth network function NEF2. As shown in FIG. 7, the method includes the following steps.

At step S710, a sixth message sent by a second network function NEF1 is received for requesting to obtain EAS information;
and/or, a tenth message is sent to a sixth network function SMF2 for requesting to obtain EAS information.

Optionally, in the method, the method includes:
receiving an eleventh message sent by the sixth network function SMF2, the eleventh message including the EAS information.

Optionally, in the method, the method includes:
sending the seventh message to the second network function NEF1, the seventh message including the EAS information.

Optionally, in the method, the sixth message and the tenth message each includes at least one of the following information:
a location of a terminal;
an application identifier;
a PLMN identifier; or
an external group identifier.

Optionally, in the method, the eleventh message includes at least one of the following information:
an EAS IP address; or
an EAS FQDN.

The embodiment of the disclosure also provides a method for discovering an EAS, which is performed by a sixth network function SMF2. As shown in FIG. 8, the method includes the following steps.

At step S810, a tenth message sent by a fourth network function NEF2 is received for requesting to obtain EAS information;
and/or, EAS information is obtained according to the tenth message.

Optionally, in the method, the method includes:
sending an eleventh message to the fourth network function NEF2, the eleventh message including the EAS information.

Optionally, in the method, obtaining the EAS information according to the tenth message, includes:
obtaining the EAS information according to the tenth message after a seventh network function EASDF2 performs DNS query for a DNS server.

Optionally, in the method, the method includes:
determining the DNS server according to third information.

Optionally, in the method, the third information includes at least one of:
a location of a terminal;
application representation;
external group identifier; or
EDI.

Optionally, in the method, the tenth information includes at least one of:
a location of a terminal;
an application identifier;
a PLMN identifier; or
an external group identifier.

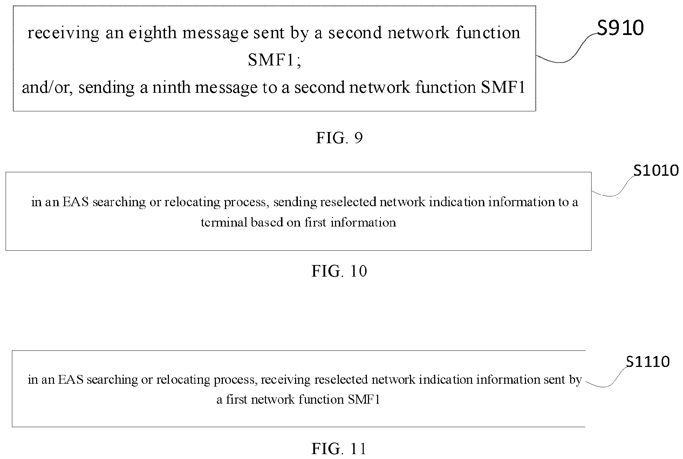

The embodiment of the disclosure also provides a method for discovering an EAS, which is performed by a fifth network function Federation NRF. As shown in FIG. 9, the method includes the following steps.

At step S910, an eighth message sent by a second network function SMF1 is received;
and/or, a ninth message is sent to a second network function SMF1.

Optionally, in the method, the ninth message includes address information of a fourth network function NEF2.

Optionally, in the method, the eighth information includes at least one of:
a location of a terminal;
an application identifier;
a PLMN identifier; or
an external group identifier.

It should be noted that the specific implementations and processes of the method for discovering applied to the above-mentioned second network function, the fourth network function, the sixth network function, and the fifth network function described in the embodiments of the disclosure can be combined with FIGS. 3 and 4, and can be referred to the detailed description of the method applied to the first network function, which will not be described here.

### Second Embodiment

In the method for discovering described in the second embodiment of the disclosure, in an EAS searching or relocating process, a first network function uses first information to send a reselected network indication to a terminal to instruct the terminal to access another network by performing network reselection, thereby realizing cross-network discovery and access of an EAS.

In the method for discovering described in the second embodiment of the disclosure, in an implementation, the method is performed by the first network function SMF1. As shown in FIG. 10, the method includes the following steps.

At step S1010, in an EAS searching or relocating process, reselected network indication information is sent to a terminal based on first information.

Optionally, the reselected network indication information includes network information of a reselected network. Optionally, the reselected network indication information is used to indicate relevant information of a network to which the terminal needs to be re-accessed, which may be at least one of a PLMN identifier (ID), single network slice selection assistance information (S-NSSAI), network slice selection assistance information (NSSAI) and a data network name (DNN).

By adopting the method for discovering described in this embodiment, the first network function uses the first information to send the reselected network indication information to the terminal, to instruct the terminal to access to another network through network reselection, thereby realizing cross-network discovery and access of an EAS.

In the embodiment 1 of the disclosure, the first network function is a network function of a first network. Optionally, the first network function is an SMF, and in order to distinguish it from network functions of a second network, the first network function may be represented by SMF1.

In an implementation, in an EAS searching process, the method further includes:
receiving a first message sent by a second network function.

When receiving a second message, the second network function matches the second message with a first rule and sends the first message to the first network function SMF1.

Optionally, in an EAS searching process, sending, by the first network function, the reselected network indication information to the terminal based on the first information, includes:
sending, by the first network function, the reselected network indication information to the terminal based on the first information after receiving the first message.

Optionally, the first rule includes at least one of:
according to a location of the terminal, providing no edge application service in a first network; or
an application requested of the second message being a joint application, and a second network providing an edge application service.

In the second embodiment of the disclosure, optionally, the second network function may be an EASDF. To conveniently distinguish the second network function from the network functions of the second network, the second network function may be represented by EASDF1.

Optionally, the first message and the second message are DNS query messages.

In the method for discovering described in the embodiment of the disclosure, in an implementation, in an EAS searching process, the terminal sends the second message (i.e., the DNS query message) to the second network function EASDF1. The second network function EASDF1 matches the second message with the first rule and sends the first message to the first network function SMF1. The first network function SMF1 sends the reselected network indication information to the UE based on the first information and according to the first message.

In the method for discovering of the second embodiment of the disclosure, in an implementation, optionally, in an EAS relocating process, sending the reselected network indication information to the terminal based on the first information, includes:
in the EAS relocating process, in response to conditions of a second rule being satisfied, sending the reselected network indication information to the terminal based on the first information.

The second rule includes at least one of:
an AF triggering EAS redirection; or
the terminal being moving.

In detail, when it is detected that the second rule is met, the first network function SMF1 sends the reselected network indication information to the terminal based on the first information.

Optionally, in the embodiment of the disclosure, the method includes:
in response to an EAS redirection condition being satisfied, obtaining re-directable EAS information and/or a list of PLMN IDs sent by an AF.

Optionally, the first information includes at least one of:
federation information;
a federation capability identifier of a terminal;
a serving network; or
an operator latency list.

Optionally, the method includes:
obtaining the serving network and/or the federation capability identifier during a PDU session establishment process of the terminal.

Optionally, in the method, the method includes:
receiving, by the first network function SMF1, the federation information sent by a third network function NEF1 through a third message.

Optionally, in the method, the federation information includes at least one of:
an application identifier;
a DNAI;
a PLMN identifier;
latency information; or
a supported access mode.

Optionally, in the method, the federation information is provided by an AF to the second network function NEF.

In the embodiment of the disclosure, the specific implementation in which the AF provides the federation information to the second network function NEF, and then the NEF sends the federation information to the SMF can be seen in FIG. 5, which will not be described in detail here.

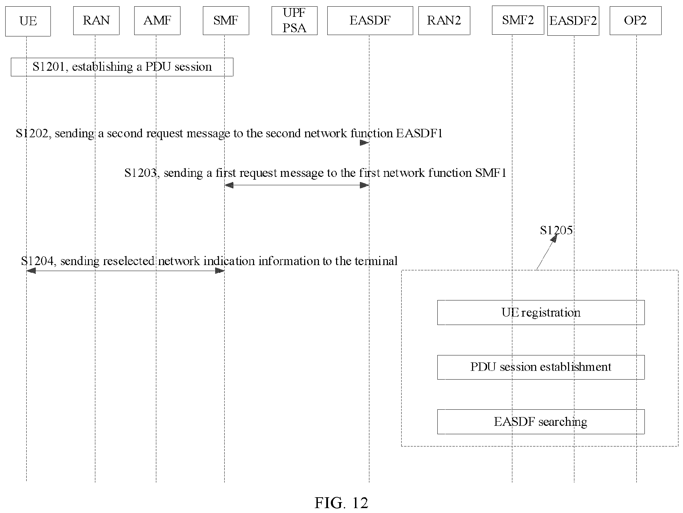

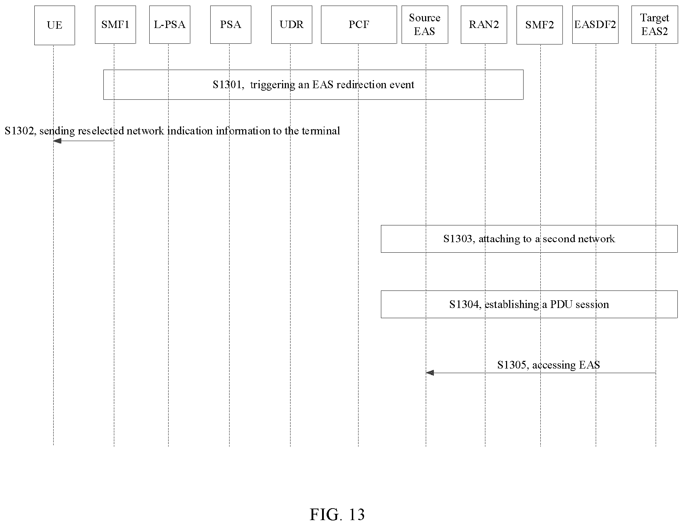

A detailed description of the specific implementation of the method for discovering described in the second embodiment of the disclosure during the EAS searching process and the EAS relocating process will be described below in combination with FIGS. 12 and 13.

As shown in FIG. 12, in an EAS searching process, the method for discovering described in the second embodiment of the disclosure is used to implement cross-network discovery and access of an EAS. The method includes the following steps.

At step S1201, a terminal (UE) completes PDU session establishment in a first network. Optionally, in the PDU session establishment process, SM context information of the PDU session establishment process carries a serving network and/or a federation capability identifier of the terminal. Optionally, the serving network includes but is not limited to a PLMN ID.

At step S1202, after selecting an EASDF1 (a second network function) of the first network, the terminal sends a second message to the second network function EASDF1. Optionally, the second message is a DNS query request.

At step S1203, the second network function EASDF1 matches the second message with a first rule according to the second message, and sends a first message to a first network function SMF1. The first message may be a DNS message. The SMF sends a response message to the first message to the second network function EASDF 1.

Optionally, the first rule includes at least one of:
according to a location of the terminal, providing no edge application service in a first network; or
an application requested of the second message being a joint application, and a second network providing an edge application service.

At step S1204, according to the first message, the first network function SMF1 sends reselected network indication information to the terminal based on first information. Optionally, the reselected network indication information includes network information of a reselected network.

In detail, the first network function SMF1 screens out a network list containing networks of other operators that can provide services to the terminal based on at least one of federation information, a federation capability identifier of the terminal or a serving network in the first information. According to a latency list of each operator fed back by the AF, the operator network (second network) with the shortest latency is selected from the network list of other operators to provide services to the terminal.

According to the above screening process, when it is determined that the network to which the optimal EAS2 capable of providing services to the terminal belongs only supports access through the second network (such as 5GC2), that is, there is no direct information connection between the first network (such as 5GC1) and the EAS2, a reselected network indication is sent to the terminal. The reselected network indication includes network information of a reselected network, such as a PLMN ID of the reselected network, so that the terminal can establish a PDU session with the reselected network (second network) corresponding to the network information, and search for or discover a suitable EAS through an EASDF2 of the second network.

At step S1205, the terminal establishes a PDU session with a network (second network) corresponding to the network information and searches for or discovers the suitable EAS through the EASDF2 of the second network.

Optionally, the terminal searches for or discovers the suitable EAS through the EASDF2 by sending a DNS request message to the EASDF2, the specific implementation of which is not described in detail herein.

In the above implementation, in the EAS searching process, the first network function SMF 1 can screen out a second network that can provide an EAS service to the terminal based on the first information, and send a reselected network indication to the terminal to instruct the terminal to establish the PDU session with the network corresponding to the network information indicated by the reselected network indication, to search for or discover the EAS, thereby realizing discovery or access of a cross-network EAS.

As illustrated in FIG. 13, in an EAS relocating process, the method for discovering described in the second embodiment of the disclosure is used to implement discovery and access of a cross-network EAS. The method includes the following steps.

At step S1301, an EAS redirection event is triggered, e.g., when a first network function SMF1 detects that the UE is moving; and/or, EAS redirection is triggered by an AF, e.g., when the AF detects that a serving state of the terminal does not meet requirements, the AF triggers the EAS redirection.

Optionally, when the EAS redirection event is triggered, the AF also sends first notification information to the first network function SMF1. The first notification information includes accessible EAS information and/or a list of PLMN IDs.

In an implementation, optionally, in the case where the first network function SMF1 detects that the UE is moving, the method further includes:
sending, by the first network function SMF1, location report information to the AF for reporting a current location of the terminal.

The AF sends the first notification information to the first network function SMF1 according to the location report information sent by the first network function SMF1.

At step S1302, the first network function SMF1 sends reselected network indication information to a terminal based on first information. Optionally, the reselected network indication information includes network information of a reselected network.

In detail, the first network function SMF1 screens out a network list containing networks of other operators that can provide services to the terminal based on at least one of federation information, a federation capability identifier of the terminal or a serving network in the first information. According to a latency list of each operator fed back by the AF, the operator network (second network) with the shortest latency is selected from the network list of other operators to provide services to the terminal.

According to the above screening process, when it is determined that the network to which the optimal EAS2 capable of providing services to the terminal belongs only supports access through the second network (such as 5GC2), that is, there is no direct information connection between the first network (such as 5GC1) and the EAS2, a reselected network indication is sent to the terminal. The reselected network indication includes network information of a reselected network, such as a PLMN ID of the reselected network, so that the terminal can establish a PDU session with the reselected network (second network) corresponding to the network information, and access the corresponding EAS.

At step S1303, the terminal attaches to the second network according to the reselected network indication information.

At step S1304, the terminal establishes a PDU session in the second network.

At step S1305, the terminal accesses an EAS of the second network through the PDU session established in the second network.

In the above implementation, in an EAS searching or relocating process, the first network function uses the first information to achieve discovery and access of a cross-network EAS by sending the reselected network indication to the terminal, to instruct the terminal to access another network by means of network reselection.

The embodiment of the disclosure also provides a method for discovering an EAS, which is performed by a terminal. As shown in FIG. 11, the method includes the following steps.

At step S1110, in an EAS searching or relocating process, reselected network indication information sent by a first network function SMF1 is received.

Optionally, in the method, the method includes:
establishing a PDU session with a network indicated by the reselected network indication information, and performing EAS accessing.

The specific implementation of the method for discovering applied to the terminal described in the embodiment of the disclosure can be referred to FIGS. 12 and 13, which will not be described in detail herein.

It should be noted that the specific names of messages or information (e.g., the first message to the fourteenth message, the first information to the third information, and the federation information, etc.) listed in the embodiments of the disclosure are only examples. In practice, those skilled in the art may also assign other names to these messages or information, which are not limited in the disclosure.

The embodiment of the disclosure also provides a network device, which is a first network function. The network device includes a transceiver, configured to:
send a first message to a second network function.

Optionally, in the network device, sending, by the first network function, the first message to the second network function NEF1, includes:
in an EAS searching or relocating process, sending, by the first network function, the first message to the second network function based on first information.

Optionally, in the network device, after sending, by the first network function, the first message to the second network function, the transceiver is further configured to:
receive a second message sent by the second network function;
in which the second message includes EAS information.

Optionally, in the network device, the transceiver is further configured to:
in an EAS searching process, receive a third message sent by a third network function.

Optionally, in the network device, the transceiver is further configured to:
receive, by the third network function, a fourth message and matches the fourth message with a first rule, and then send the third message to the first network function.

Optionally, in the network device, the first rule is a DNS message processing rule.

Optionally, in the network device, sending, by the first network device, the first message to the second network function, includes:
sending, by the first network device, the first message to the second network function according to the third message.

Optionally, in the network device, the first rule includes at least one of:
according to a location of a terminal, providing no edge application service in a first network;
an application requested by the fourth message being a joint application; or
a second network providing an edge application service.

Optionally, in the network device, in an EAS relocating process, sending, by the first network device, the first message to the second network function, includes:
in an EAS relocating process, in response to a second rule being met, sending, by the first network device, the first message to the second network function.

Optionally, in the network device, the second rule includes at least one of:
according to a location of a terminal, providing no edge application service in a first network; or
a second network providing edge application services.

Optionally, in the network device, the transceiver is configured to:
in an EAS searching process, screen networks based on the first information, and select an EAS that can provide services to a terminal.

Optionally, in the network device, the first message includes at least one of the following information:
a location of a terminal;
an application identifier;
a PLMN identifier; or
an external group identifier.

Optionally, in the network device, the first information includes at least one of:
federation information;
a federation capability identifier of a terminal;
a serving network; or
an operator latency list.

Optionally, in the network device, the transceiver is further configured to:
obtain the serving network and/or the federation capability identifier in a PDU session establishment process of the terminal.

Optionally, in the network device, the method further includes:
receiving, by the first network function, the federation information sent by the second network function through a fifth message.

Optionally, in the network device, the federation information includes at least one of:
an application identifier;
a DNAI;
a PLMN identifier;
latency information; or
a supported access mode.

Optionally, in the network device, the federation information is provided by an AF to the second network function NEF.

Optionally, in the network device, in an EAS searching or relocating process, after receiving the second message sent by the second network function, the transceiver is further configured to:
in a PDU session change process, insert an L-PSA as needed.

Optionally, in the network device, in an EAS searching or relocating process, after receiving the second message sent by the second network function, the transceiver is further configured to:
carry EAS information in a PDU session modification command.

Optionally, in the network device, the second message includes at least one of the following information:
an EAS IP address; or
an EAS FQDN.

The embodiment of the disclosure also provides a network device, which is a second network function. The network device includes a transceiver, configured to:
receive a first message sent by a first network function;
and/or, obtain address information of a fourth network function;
and/or, send a sixth message to a fourth network function to request to obtain EAS information.

Optionally, in the network device, the transceiver is further configured to:
receive a seventh message sent by the fourth network function, the seventh message including the EAS information.

Optionally, in the network device, the transceiver is further configured to:
send a second message to the first network function, the second message including the EAS information.

Optionally, in the network device, obtaining the address information of the fourth network function, includes:
obtaining the address information of the fourth network function according to second information.

Optionally, in the network device, the second information is network pre-configured information for searching for address information of a cross-network NEF.

Optionally, in the network device, the transceiver is further configured to:
send an eighth message to a fifth network function;
and/or, receive a ninth message sent by a fifth network function.

Optionally, in the network device, the ninth message includes the address information of the fourth network function.

Optionally, in the network device, the first message includes at least one of the following information:
a location of a terminal;
an application identifier;
a PLMN identifier; or
an external group identifier.

Optionally, in the network device, the seventh message includes at least one of the following information:
an EAS IP address; or
an EAS FQDN.

Optionally, in the network device, the eighth message includes at least one of the following information:
a location of a terminal;
an application identifier;
a PLMN identifier; or
an external group identifier.

The embodiment of the disclosure also provides a network device, which is a fourth network function. The network device includes a transceiver, configured to:
receive a sixth message sent by a second network function for requesting to obtain EAS information;
and/or, send a tenth message to a sixth network function for requesting to obtain EAS information.

Optionally, in the network device, the transceiver is further configured to:
receive an eleventh message sent by the sixth network function, the eleventh message including the EAS information.

Optionally, in the network device, the transceiver is further configured to:
sending a seventh message to the second network function NEF1, the seventh message including the EAS information.

Optionally, in the network device, the sixth message and the tenth message each includes at least one of the following information:
a location of a terminal;
an application identifier;
a PLMN identifier; or
an external group identifier.

Optionally, in the network device, the eleventh message includes at least one of the following information:
an EAS IP address; or
an EAS FQDN.

The embodiment of the disclosure also provides a network device, which is a sixth network function. The network device includes a transceiver, configured to:
receive a tenth message sent by a fourth network function for requesting to obtain EAS information;
and/or, obtain EAS information according to a tenth message.

Optionally, in the network device, the transceiver is further configured to:
send an eleventh message to the fourth network function, the eleventh message including the EAS information.

Optionally, in the network device, obtaining the EAS information according to the tenth message, includes:
obtaining the EAS information according to the tenth message after a seventh network function performs DNS query for a DNS server.

Optionally, in the network device, the transceiver is further configured to:
determine, by the sixth network function, the DNS server according to third information.

Optionally, in the network device, the third information includes at least one of:
a location of a terminal;
application representation;
an external group identifier; or
EDI.

Optionally, in the network device, the tenth information includes at least one of:
a location of a terminal;
an application identifier;
a PLMN identifier; or
an external group identifier.

The embodiment of the disclosure also provides a network device, which is a fifth network function. The network device includes a transceiver, configured to:
receive an eighth message sent by a second network function;
and/or, send a ninth message to a second network function.

Optionally, in the network device, the ninth message includes address information of a fourth network function.

Optionally, in the network device, the eighth information includes at least one of:
a location of a terminal;
an application identifier;
a PLMN identifier; or
an external group identifier.

The embodiment of the disclosure also provides a network device, which is a first network function. The network device includes a transceiver, configured to:
in an EAS searching or relocating process, send reselected network indication information to a terminal based on first information.

Optionally, in the network device, in the EAS searching process, the transceiver is further configured to:
receive a first message sent by a second network function.

Optionally, in the network device, in the EAS searching process, the transceiver is further configured to:
receive, by the second network function, a second message and matching the second message with a first rule, and sending the first message to the first network function.

Optionally, in the network device, in an EAS searching process, sending, by the first network function, the reselected network indication information to the terminal based on the first information, includes:
sending, by the first network function, the reselected network indication information to the terminal based on the first information after receiving the first message.

Optionally, in the network device, the first rule includes at least one of:
according to a location of the terminal, providing no edge application service in a first network; or
an application requested of the second message being a joint application, and providing a second network edge application services.

Optionally, in the network device, in an EAS relocating process, sending the reselected network indication information to the terminal based on the first information, includes:
in the EAS relocating process, in response to conditions of a second rule being satisfied, sending the reselected network indication information to the terminal based on the first information.

Optionally, in the network device, the second rule includes at least one of:
an AF triggering EAS redirection; or
the terminal being moving.

Optionally, in the network device, the transceiver is further configured to:
select an EAS by screening a network list based on the first information.

Optionally, in the network device, the first information includes at least one of:
federation information;
a federation capability identifier of a terminal;
a serving network; or
an operator latency list.

Optionally, in the network device, the transceiver is further configured to:
obtain the serving network and/or the federation capability identifier in a PDU session establishment process of the terminal.

Optionally, in the network device, the transceiver is further configured to:
receive, by the first network function, the federation information sent by a third network function through a third message.

Optionally, in the network device, the federation information includes at least one of:
an application identifier;
a DNAI;
a PLMN identifier;
latency information; or
a supported access mode.

Optionally, in the network device, the federation information is provided by an AF to the second network function.

The embodiment of the disclosure also provides a terminal. The terminal includes a transceiver, configured to:
in an EAS searching or relocating process, receive reselected network indication information sent by a first network function.

Optionally, the terminal also includes a processor, configured to:
establish a PDU session with a network indicated by the reselected network indication information, and perform EAS accessing.

The embodiment of the disclosure also provides an apparatus for discovering an EAS, which is applicable for a first network function. The apparatus includes:
a first transceiver unit, configured to send a first message to a second network function.

The apparatus for discovering in the embodiment of the disclosure corresponds to specific implementations of the method for discovering applied to the first network function in embodiments of the disclosure, which will not be described in detail herein.

The embodiment of the disclosure also provides an apparatus for discovering an EAS, which is applicable for a second network function. The apparatus includes:
a second transceiver unit, configured to: receive a first message sent by a first network function;
and/or, obtain address information of a fourth network function;
and/or, send a sixth message to a fourth network function for requesting to obtain EAS information.

The apparatus for discovering in the embodiment of the disclosure corresponds to specific implementations of the method for discovering applied to the second network function in embodiments of the disclosure, which will not be described in detail herein.

The embodiment of the disclosure also provides an apparatus for discovering an EAS, which is applicable for a fourth network function. The apparatus includes:
a third transceiver unit, configured to: receive a sixth message sent by a second network function for requesting to obtain EAS information;
and/or, send a tenth message to a sixth network function for requesting to obtain EAS information.

The apparatus for discovering in the embodiment of the disclosure corresponds to specific implementations of the method for discovering applied to the fourth network function in embodiments of the disclosure, which will not be described in detail herein.

The embodiment of the disclosure also provides an apparatus for discovering an EAS, which is applicable for a sixth network function. The apparatus includes:
a fourth transceiver unit, configured to: receive a tenth message sent by a fourth network function for requesting to obtain EAS information;
and/or, obtain EAS information according to a tenth message.

The apparatus for discovering in the embodiment of the disclosure corresponds to specific implementations of the method for discovering applied to the sixth network function in embodiments of the disclosure, which will not be described in detail herein.

The embodiment of the disclosure also provides an apparatus for discovering an EAS, which is applicable for a fifth network function. The apparatus includes:
a fifth transceiver unit, configured to: receive an eighth message sent by a second network function;
and/or, send a ninth message to a second network function.

The apparatus for discovering in the embodiment of the disclosure corresponds to specific implementations of the method for discovering applied to the fifth network function in embodiments of the disclosure, which will not be described in detail herein.

The embodiment of the disclosure also provides an apparatus for discovering an EAS, which is applicable for a first network function. The apparatus includes:
a first transceiver unit, configured to: in an EAS searching or relocating process, send reselected network indication information to a terminal based on first information.

The apparatus for discovering in the embodiment of the disclosure corresponds to specific implementations of the method for discovering applied to the first network function in the second embodiment of the disclosure, which will not be described in detail herein.

The embodiment of the disclosure also provides an apparatus for discovering an EAS, which is applicable for a terminal. The apparatus includes:
a second transceiver unit, configured to: in an EAS searching or relocating process, receive reselected network indication information sent by a first network function.

The apparatus for discovering in the embodiment of the disclosure corresponds to specific implementations of the method for discovering applied to the terminal in the second embodiment of the disclosure, which will not be described in detail herein.

The embodiment of the disclosure also provides a network device, including: a transceiver, a processor, a memory, and programs or instructions stored on the memory and executable by the processor. When the programs or instructions are executed by the processor, the method for discovering as described in any of the above embodiments is implemented.

Optionally, the network device may be any of the network functions or terminals described above, and the specific implementation of the method for discovering executed by the corresponding processor may be referred to the above detailed descriptions and will not be described herein.

The embodiment of the disclosure also provides a readable storage medium having programs or instructions stored thereon. When the programs or instructions are executed by a processor, the steps in the method for discovering an EAS as described above are implemented, the same technical effects can be achieved, which will not be repeated herein to avoid repetition.

The processor is a processor in the network device described in the above embodiments. The readable storage medium includes a computer-readable storage medium, such as a Read-Only Memory (ROM), a Random Access Memory (RAM), a magnetic disc or a compact disc.

It is further noted that the terminals described in this specification include, but are not limited to, smartphones, tablets and the like. Many functional components described are referred to as modules, in order to emphasize their implementation independence.

Modules in embodiments of the disclosure may be implemented in software to be executed by various types of processors. By way of example, an identified module of executable code may include one or more physical or logical blocks of computer instructions, which, by way of example, may be constructed as objects, procedures, or functions. Nevertheless, the executable code of the identified module does not need to be physically located together, but may include different instructions stored in different bits which, when logically combined, constitute the module and fulfil the prescribed purpose of the module.

Actually, the executable code module may be a single instruction or multiple instructions, and may even be distributed over a number of different code segments, among different programs, and cross a number of memory devices. Similarly, operating data may be identified within the module and may be implemented in any suitable form and organized within any suitable type of data structure. The operating data may be collected as a single dataset, or may be distributed at different locations (including on different memory devices), and may exist, at least in part, only as electronic signals on a system or network.

When a module can be implemented by software, taking into account the level of existing hardware technology, the module can be implemented by software. Without considering the cost, technical personnel in this field can build corresponding hardware circuits to implement corresponding functions. The hardware circuits include conventional very large scale integration (VLSI) circuits or gate arrays and existing semiconductors such as logic chips, transistors, or other discrete components. A module may also be implemented in programmable hardware devices such as field programmable gate arrays, programmable array logic, programmable logic devices or the like.

The above exemplary embodiments are described with reference to the accompanying drawings. Many different forms and embodiments are possible without departing from the spirit and teachings of the disclosure. Therefore, the disclosure should not be constructed as limiting the exemplary embodiments set forth herein. Rather, these exemplary embodiments are provided so that this disclosure can be thorough and complete, and convey the scope of the disclosure to those skilled in the art. In the drawings, component sizes and relative sizes may be exaggerated for clarity. The terms used herein is for the purpose of describing particular example embodiments only and is not intended to be limiting. As used herein, the singular forms "a", "one" and "the" are intended to include the plural forms as well, unless the context clearly indicates otherwise. It will be further understood that the terms "comprise" and/or "include" used in this specification indicate the presence of the described features, integers, steps, operations, components and/or elements, but do not exclude the presence or addition of one or more other features, integers, steps, operations, components, elements and/or groups thereof. Unless otherwise indicated, when stated, a range of values includes the upper and lower limits of that range and any sub-ranges therebetween.

The above are preferred embodiments of the disclosure. It should be pointed out that for ordinary technicians in this technical field, several improvements and modifications can be made without departing from the principles described in the disclosure. These improvements and modifications should also be regarded as within the scope of protection of the disclosure.

## Claims

1. A method for discovering an edge application server (EAS), performed by a first network function, comprising:
sending, by the first network function, a first message to a second network function.

2. The method of claim 1, wherein sending, by the first network function, the first message to the second network function, comprises:
in an EAS searching or relocating process, sending, by the first network function, the first message to the second network function based on first information.

3. The method of claim 1 or 2, wherein after sending, by the first network function, the first message to the second network function, the method further comprises:
receiving a second message sent by the second network function;
wherein the second message comprises EAS information.

4. The method of claim 1, further comprising:
in an EAS searching process, receiving a third message sent by a third network function.

5. The method of claim 4, further comprising:
receiving, by the third network function, a fourth message that matches a first rule, and sending the third message to the first network function.

6. The method of claim 5, wherein the first rule is a domain name system (DNS) message processing rule.

7. The method of claim 4, wherein sending, by the first network function, the first message to the second network function, comprises:
sending, by the first network function, the first message to the second network function according to the third message.

8. The method of claim 5, wherein the first rule comprises at least one of:
according to a location of a terminal, providing no edge application service in a first network;
an application requested by the fourth message being a joint application; or
a second network providing an edge application service.

9. The method of claim 2, wherein in an EAS relocating process, sending, by the first network function, the first message to the second network function, comprises:
in the EAS relocating process, in response to a second rule being met, sending, by the first network function, the first message to the second network function.

10. The method of claim 9, wherein the second rule comprises at least one of:
according to a location of a terminal, providing no edge application service in a first network; and
a second network providing an edge application service.

11. The method of claim 2, further comprising:
in the EAS searching process, screening networks based on the first information, and selecting an EAS that can provide services to a terminal.

12. The method of claim 1, wherein the first message comprises at least one of the following information:
a location of a terminal;
an application identifier;
a public land mobile network (PLMN) identifier; or
an external group identifier.

13. The method of claim 2, wherein the first information comprises at least one of:
federation information;
a federation capability identifier of a terminal;
a serving network; or
an operator latency list.

14. The method of claim 13, further comprising:
obtaining the serving network and/or the federation capability identifier in a protocol data unit (PDU) session establishment process of a terminal.

15. The method of claim 13, further comprising:
receiving, by the first network function, the federation information sent by the second network function through a fifth message.

16. The method of claim 15, wherein the federation information comprises at least one of:
an application identifier;
a data network access identifier (DNAI);
a PLMN identifier;
latency information; or
a supported access mode.

17. The method of claim 15, wherein the federation information is provided by an application function (AF) to the second network function NEF.

18. The method of claim 3, wherein in an EAS searching or relocating process, after receiving the second message sent by the second network function, the method further comprises:
in a PDU session change process, inserting a local PDU session anchor (L-PSA) as needed.

19. The method of claim 3, wherein in an EAS searching or relocating process, after receiving the second message sent by the second network function, the method further comprises:
carrying EAS information in a PDU session modification command.

20. The method of claim 3, wherein the second message comprises at least one of the following information:
an EAS IP address; or
an EAS fully qualified domain name (FQDN).

21. A method for an edge application server (EAS), performed by a second network function, comprising:
receiving a first message sent by a first network function;
and/or, obtaining address information of a fourth network function;
and/or, sending a sixth message to a fourth network function for requesting to obtain EAS information.

22. The method of claim 21, further comprising:
receiving a seventh message sent by the fourth network function, the seventh message comprising EAS information.

23. The method of claim 21, further comprising:
sending a second message to the first network function, the second message comprising EAS information.

24. The method of claim 21, wherein obtaining the address information of the fourth network function, comprises:
obtaining the address information of the fourth network function according to second information.

25. The method of claim 24, wherein the second information is network pre-configured information for searching for address information of a cross-network network exposure function (NEF).

26. The method of claim 21, further comprising:
sending an eighth message to a fifth network function;
and/or, receiving a ninth message sent by a fifth network function.

27. The method of claim 26, wherein the ninth message comprises the address information of the fourth network function.

28. The method of claim 21, wherein the first message comprises at least one of the following information:
a location of a terminal;
an application identifier;
a public land mobile network (PLMN) identifier; or
an external group identifier.

29. The method of claim 22, wherein the seventh message comprises at least one of the following information:
an EAS IP address; or
an EAS fully qualified domain name (FQDN).

30. The method of claim 26, wherein the eighth message comprises at least one of the following information:
a location of a terminal;
an application identifier;
a public land mobile network (PLMN) identifier; or
an external group identifier.

31. A method for an edge application server (EAS), performed by a fourth network function, comprising:
receiving a sixth message sent by a second network function for requesting to obtain EAS information;
and/or, sending a tenth message to a sixth network function for requesting to obtain EAS information.

32. The method of claim 31, further comprising:
receiving an eleventh message sent by the sixth network function, the eleventh message comprising the EAS information.

33. The method of claim 31, further comprising:
sending a seventh message to the second network function NEF1, the seventh message comprising the EAS information.

34. The method of claim 31, wherein the sixth message and the tenth message each comprises at least one of the following information:
a location of a terminal;
an application identifier;
a public land mobile network (PLMN) identifier; or
an external group identifier.

35. The method of claim 32, wherein the eleventh message comprises at least one of the following information:
an EAS IP address; or
an EAS fully qualified domain name (FQDN).

36. A method for discovering an edge application server (EAS), performed by a sixth network function, comprising:
receiving a tenth message sent by a fourth network function for requesting to obtain EAS information;
and/or, obtaining EAS information according to a tenth message.

37. The method of claim 36, further comprising:
sending an eleventh message to the fourth network function, the eleventh message comprising the EAS information.

38. The method of claim 36, wherein obtaining the EAS information according to the tenth message, comprises:
obtaining the EAS information according to the tenth message after a seventh network function performs DNS query for a DNS server.

39. The method of claim 38, further comprising:
determining, by the sixth network function, the DNS server according to third information.

40. The method of claim 39, wherein the third information comprises at least one of:
a location of a terminal;
application representation;
external group identifier; or
EAS deployment information (EDI).

41. The method of claim 36, wherein the tenth information comprises at least one of:
a location of a terminal;
an application identifier;
a public land mobile network (PLMN) identifier; or
an external group identifier.

42. A method for discovering an edge application server (EAS), performed by a fifth network function, comprising:
receiving an eighth message sent by a second network function;
and/or, sending a ninth message to a second network function.

43. The method of claim 42, wherein the ninth message comprises address information of a fourth network function.

44. The method of claim 42, wherein the eighth message comprises at least one of:
a location of a terminal;
an application identifier;
a public land mobile network (PLMN) identifier; or
an external group identifier.

45. A method for discovering an edge application server (EAS), performed by a first network function, comprising:
in an EAS searching or relocating process, sending reselected network indication information to a terminal based on first information.

46. The method of claim 45, wherein in the EAS searching process, the method further comprises:
receiving a first message sent by a second network function.

47. The method of claim 46, wherein in the EAS searching process, the method further comprises:
receiving, by the second network function, a second message, matching the second message with a first rule, and sending the first message to the first network function.

48. The method of claim 46, wherein in the EAS searching process, sending, by the first network function, the reselected network indication information to the terminal based on the first information, comprises:
sending, by the first network function, the reselected network indication information to the terminal based on the first information after receiving the first message.

49. The method of claim 47, wherein the first rule comprises at least one of:
according to a location of the terminal, providing no edge application service in a first network; or
an application requested of the second message being a joint application, and a second network providing an edge application service.

50. The method of claim 45, wherein in the EAS relocating process, sending the reselected network indication information to the terminal based on the first information, comprises:
in the EAS relocating process, in response to conditions of a second rule being satisfied, sending the reselected network indication information to the terminal based on the first information.

51. The method of claim 50, wherein the second rule comprises at least one of:
an application function (AF) triggering EAS redirection; or
the terminal being moving.

52. The method of claim 45, further comprising:
selecting an EAS by screening a network list based on the first information.

53. The method of claim 45 or 52, wherein the first information comprises at least one of:
federation information;
a federation capability identifier of a terminal;
a serving network; and
an operator latency list.

54. The method of claim 53, further comprising:
obtaining the serving network and/or the federation capability identifier in a protocol data unit (PDU) session establishment process of the terminal.

55. The method of claim 53, further comprising:
receiving, by the first network function, the federation information sent by a third network function through a third message.

56. The method of claim 55, wherein the federation information comprises at least one of:
an application identifier;
a data network access identifier (DNAI);
a PLMN identifier;
latency information; or
a supported access mode.

57. The method of claim 55, wherein the federation information is provided by an AF to the second network function.

58. A method for discovering an edge application server (EAS), performed by a terminal, comprising:
in an EAS searching or relocating process, receiving reselected network indication information sent by a first network function.

59. The method of claim 58, further comprising:
establishing a PDU session with a network indicated by the reselected network indication information, and performing EAS accessing.

60. A network device, the network device being a first network function, comprising a transceiver, configured to:
send a first message to a second network function.

61. A network device, the network device being a second network function, comprising a transceiver, configured to:
receive a first message sent by a first network function;
and/or, obtain address information of a fourth network function;
and/or, send a sixth message to a fourth network function for requesting to obtain EAS information.

62. A network device, the network device being a fourth network function, comprising a transceiver, configured to:
receive a sixth message sent by a second network function for requesting to obtain EAS information;
and/or, send a tenth message to a sixth network function for requesting to obtain EAS information.

63. A network device, the network device being a sixth network function, comprising a transceiver, configured to:
receive a tenth message sent by a fourth network function for requesting to obtain EAS information;
and/or, obtain EAS information according to a tenth message.

64. A network device, the network device being a fifth network function, comprising a transceiver, configured to:
receive an eighth message sent by a second network function;
and/or, send a ninth message to a second network function.

65. A network device, the network device being a first network function, comprising a transceiver, configured to:
in an EAS searching or relocating process, send reselected network indication information to a terminal based on first information.

66. A terminal, comprising a transceiver, configured to:
in an EAS searching or relocating process, receive reselected network indication information sent by a first network function.

67. An apparatus for discovering an edge application server (EAS), applicable for a first network function, comprising:
a first transceiver unit, configured to send a first message to a second network function.

68. An apparatus for discovering an edge application server (EAS), applicable for a second network function, comprising:
a second transceiver unit, configured to: receive a first message sent by a first network function;
and/or, obtain address information of a fourth network function;
and/or, send a sixth message to a fourth network function for requesting to obtain EAS information.

69. An apparatus for discovering an edge application server (EAS), applicable for a fourth network function, comprising:
a third transceiver unit, configured to: receive a sixth message sent by a second network function for requesting to obtain EAS information;
and/or, send a tenth message to a sixth network function for requesting to obtain EAS information.

70. An apparatus for discovering an edge application server (EAS), applicable for a sixth network function, comprising:
a fourth transceiver unit, configured to: receive a tenth message sent by a fourth network function for requesting to obtain EAS information;
and/or, obtain EAS information according to a tenth message.

71. An apparatus for discovering an edge application server (EAS), applicable for a fifth network function, comprising:
a fifth transceiver unit, configured to: receive an eighth message sent by a second network function;
and/or, send a ninth message to a second network function.

72. An apparatus for discovering an edge application server (EAS), applicable for a first network function, comprising:
a first transceiver unit, configured to: in an EAS searching or relocating process, send reselected network indication information to a terminal based on first information.

73. An apparatus for discovering an edge application server (EAS), applicable for a terminal, comprising:
a second transceiver unit, configured to: in an EAS searching or relocating process, receive reselected network indication information sent by a first network function.

74. A network device, comprising: a transceiver, a processor, a memory, and programs or instructions stored on the memory and executable by the processor, wherein when the programs or instructions are executed by the processor, the method for discovering as described in any one of claims 1-59 is implemented.

75. A readable storage medium having programs or instructions stored thereon, wherein when the programs or instructions are executed by a processor, the steps of the method for discovering as described in any one of claims 1-59 are implemented.
